# EUROPEAN PATENT SPECIFICATION

(11) **EP 2 769 781 B1**
(45) Date of publication and mention of the grant of the patent: **29.11.2017**
(21) Application number: 14155412.1
(22) Date of filing: 17.02.2014
(51) Int. Cl.: B21H 1/12, F16C 33/64

(54) **A cold rolling method for forming bearing rings**
Kaltwalzverfahren zur Herstellung von Lagerringen
Procédé de laminage à froid pour la fabrication de bagues de roulement

(30) Priority: 21.02.2013 IT TO20130145
(43) Date of publication of application: 27.08.2014
(73) Proprietor: Aktiebolaget SKF, 415 50 Göteborg (SE)
(72) Inventor: Richaud, Stefano, 12040 Ceresole d'Alba (CN) (IT); Colasanti, Paolo, 10064 Pinerolo (TO) (IT)
(74) Representative: Tedeschini, Luca

(56) References cited:
- DE-U1- 29 907 807
- JP-A- 2006 218 509
- JP-A- 2006 320 927
- US-A- 4 016 739

## Description

### TECHNICAL FIELD OF THE INVENTION

The present invention relates to a cold rolling method for forming bearing rings, in particular asymmetrical inner rings.

### BACKGROUND OF THE INVENTION

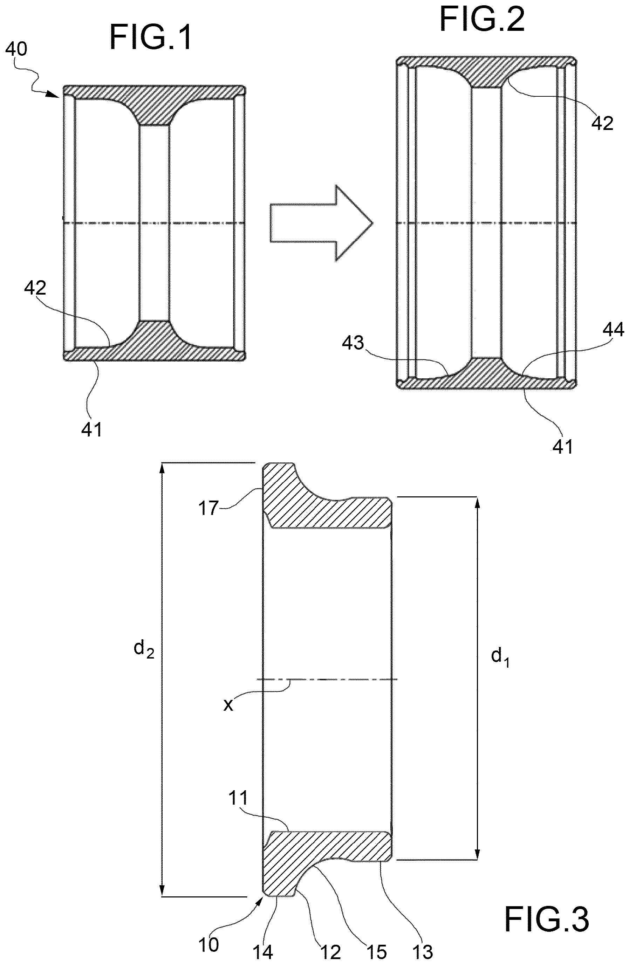

For a better understanding of the prior art and of the problems inherent thereto, a conventional cold rolling process will first be described. In Figure 1, reference numeral 40 designates an annular blank that is subjected to a roll forming process for forming its outer peripheral surface 41 and its inner surface 42, in order to form an outer bearing ring (Figure 2). The blank 40 is radially compressed and rotated between an outer forming roller and an inner forming mandrel (not shown). The outer roller and the inner mandrel have contours corresponding to the contours that outer 41 and inner 42 surfaces, respectively, should take. The outer forming roller is driven for rotation and exerts a radial thrust which rotates the blank and the inner mandrel. The combined action of rotation and radial compression between the forming roller and the mandrel gives the annular workpiece the desired deformation. The workpiece is plastically deformed from its shape as a blank (Figure 1) to the final shape (Figure 2). The rolling forming causes an increase in the final diameter of the finished ring with respect to that of the annular blank. The rolled ring illustrated in Figure 2 has a cylindrical outer peripheral surface 41, and a radially inner surface 42 with two axially flanked raceways 43, 44 for rolling elements (not shown) of a bearing. The advantages obtainable by roll forming processes are known.

With this type of processing, almost all the material of the annular blank is exploited for the formation of the finished piece. The roll forming also compacts and orientates the superficial metallic layers of the ring on which the forming rollers act. Due to this effect, bearing rings are obtained generally having a longer life than rings manufactured by processes that involve the removal of material (for example lathe machining processes).

JP 2006 218509 A discloses a cold rolling method according to the preamble of claim 1, in order to form bearing rings with an asymmetric section, such as the one illustrated in Figure 3, which is a radially inner bearing ring. In fact, due to the asymmetry of the external contour of the ring, a conventional rolling method inevitably yields surfaces having an inadmissible degree of taper in an asymmetrical ring. JP 2006 320927 A discloses another cold rolling method for bearing rings.

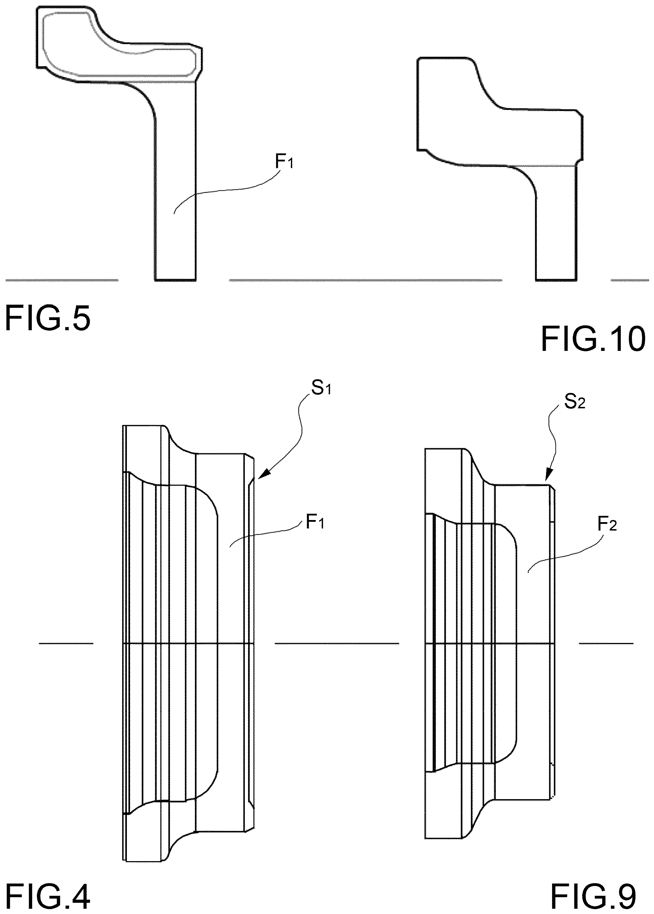

Up to now the rings having an asymmetrical cross-section have generally been machined on a lathe, starting from a forged blank (Figure 4) which has a peripheral diameter roughly corresponding to the final diameter of the ring. The annular blank (Figure 5) is obtained from the forged element (Figure 4) by removing the bottom part F1 and lathing the external surfaces of the ring (Figure 5).

### SUMMARY OF THE INVENTION

The present invention aims at applying the cold rolling technique for forming bearing rings with an asymmetrical cross-section, so as to improve manufacturing efficiency and obtain an overall saving of manufacturing costs, and particularly a saving of raw material.

The above and other objects and advantages which will be better understood hereinafter are achieved, according to the invention, by cold rolling method as defined in the appended claims.

### BRIEF DESCRIPTION OF THE DRAWINGS

An embodiment of a method according to the invention will now be described, reference being made to the accompanying drawings, given by way of non-limiting example, in which:
- Figure 1 is an axial cross sectional view of an annular blank for the manufacture of an outer bearing ring, according to the prior art;
- Figure 2 is an axial cross sectional view of an outer bearing ring, made from the annular blank of Figure 1;
- Figure 3 is an axial cross sectional view of an embodiment of an asymmetrical inner bearing ring;
- Figures 4 and 5 are schematic axial cross sectional views of a forged blank, according to the prior art;
- Figure 6 is a schematic axial cross sectional view illustrating a preliminary step of a method according to an embodiment of the present invention;

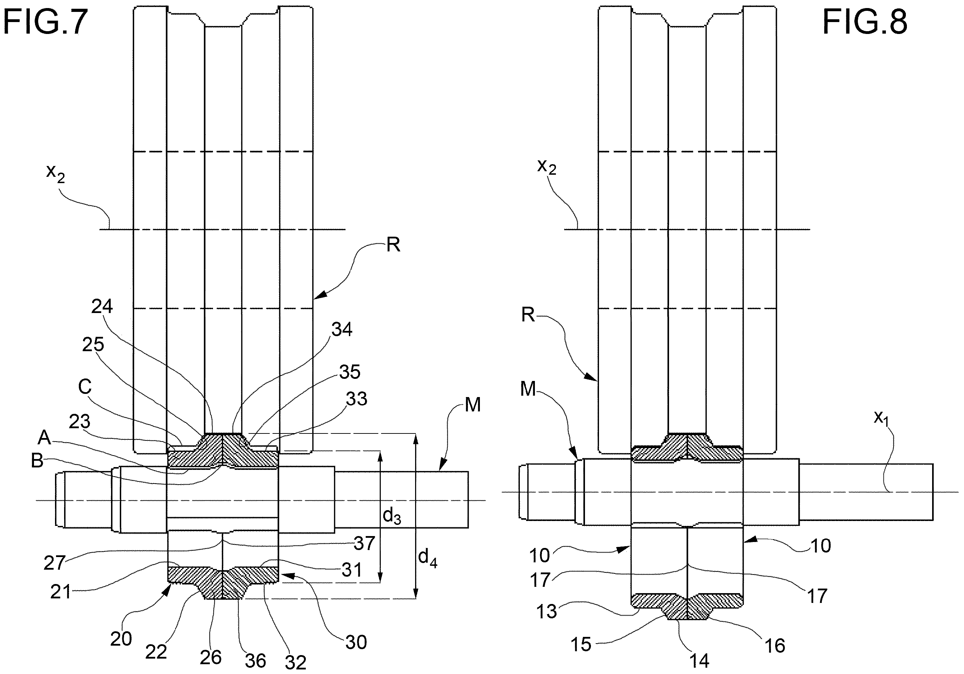

- Figures 7 and 8 are schematic views illustrating an initial step and a final step of a method according to the present invention;
- Figure 9 is a schematic axial cross sectional view of a forged blank for the manufacture of a bearing ring according to the present invention; and
- Figure 10 is a schematic, partial axial sectional view of a blank workpiece obtained from the forged blank of Figure 9.

### DETAILED DESCRIPTION OF PREFERRED EMBODIMENTS

With reference to Figure 3, the final result of the method is a radially inner bearing ring 10 of asymmetric design, defining a central axis x. The ring 10 has a radially inner surface 11 and a radially outer surface 12. The radially inner surface 11 may be substantially cylindrical, as in the example shown, or conical. The outer surface 12 forms a first axial end 13, in this example of cylindrical shape, having a first outer diameter d1, a second radially thickened axial end 14 having an outer diameter d2 greater than the first outer diameter d1, and a raceway 15 which connects the first axial end 13 to the second axial end 14. On the side of the second axial end, the ring 10 has a flat lateral surface 17, perpendicular to the central axis x.

The embodiment of the method described and illustrated herein refers to a rolling bearing ring for ball rolling elements, for which the raceway 15 has a curved contour. It is to be understood that the method is equally applicable for forming roller bearing rings, for example tapered roller bearing rings, having a conical raceway.

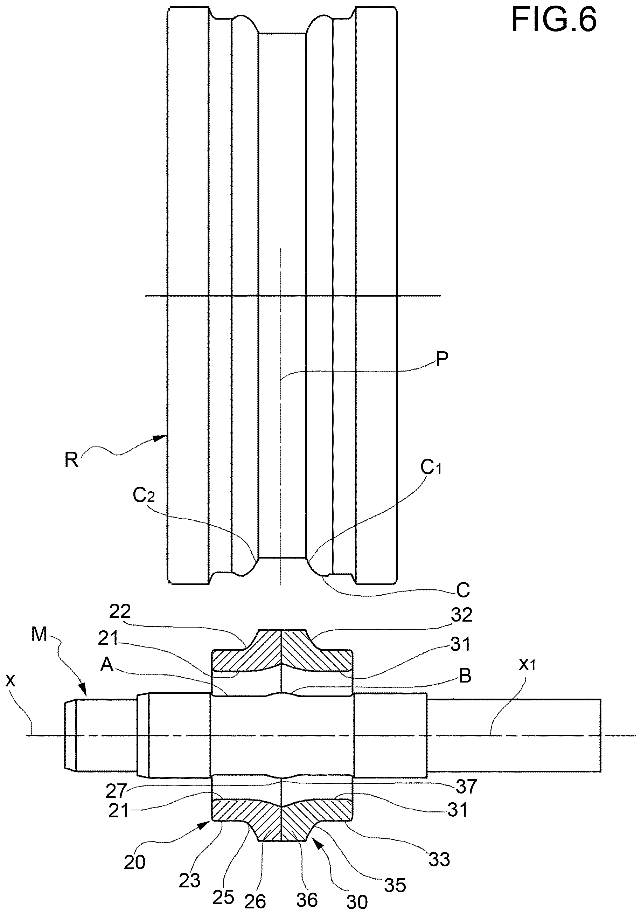

In a preliminary step of the method, two identical annular blanks 20, 30 are provided (Figure 6), preferably obtained by forging, and each defining a central axis x. Throughout the present description and in the claims, terms and expressions indicating positions and directions such as "radial" and "axial" shall be construed as referring to the x axis.

According to methods known to those skilled in the field of roll forming, each annular blank has a volume approximately corresponding to the volume of the finished ring to be manufactured. To minimize the efforts required by the roll forming machine and in order to optimize the material, the shape in axial section of the blank is preferably chosen so as to correspond substantially to the shape of the axial section that is to be given to the finished ring at the end of the forming process. Therefore, according to the invention, each annular blank has an overall asymmetrical axial cross section, with a radial thickening 26, 36 at one of the two axial ends of the blank.

In order to obtain a ring like that of Figure 3, in the illustrated embodiment the blanks 20, 30 (Figure 6) each have a radially inner surface 21, 31 and a shaped radially outer surface 22, 32. The radially inner surface 21, 31 may be substantially cylindrical, as in the example illustrated, or frustoconical. The radially outer surface 22, 32 of each annular blank 20, 30 has an asymmetrical contour when viewed in axial cross section. In each blank, the radially outer surface has a first cylindrical axial end area 23, 33, having a first outer diameter d3, and a second axial end area 24, 34, located around the radial thickening 26, 36. The second axial end area 24, 34 has a second outer diameter d4 greater than the first outer diameter d3. The radially outer surface also provides a tapered surface 25, 35 connecting the first axial end area to the second axial end area. The thickened axial end of each blank 20, 30 provides a flat lateral surface 27, 37 extending perpendicularly to the central axis x.

Two blanks 20, 30 are axially juxtaposed side by side, with their side surfaces 27, 37 abutting each other. The two annular blanks are arranged side by side between an inner forming mandrel M and an outer forming tool, in this embodiment in the form of a roller R.

The mandrel M has an outer working surface A that is urged radially against the radially inner surfaces of the two blanks. The working surface of the inner forming mandrel is a surface of revolution with respect to a first central axis x1 defined by the mandrel. The working surface A has a selected contour, adapted to give the radially inner surfaces 22, 32 of the two blanks a corresponding contour.

Preferably, the working surface A of the inner mandrel has an axially central annular relief B. The working surface A of the mandrel M has an axially symmetrical shape with respect to a geometric plane p passing through the annular relief B. The annular relief prevents undesirable axial displacements of the two blank 20, 30. The annular relief B is also useful for producing rounded surfaces in the bearing rings resulting from the process.

The outer forming roller R has an outer working surface C that is urged radially against the radially outer surfaces of the two blanks. The working surface of the outer forming roller is a surface of revolution with respect to a second central axis x2 defined by the same roller R. The x2 axis is oriented parallel to the axis x1 of the mandrel. The working surface C has a selected contour capable of conferring to the radially outer surfaces 22, 32 of the two blanks a corresponding contour. Also the working surface C of the outer roller R is axially symmetric with respect to the axial plane of symmetry p. According to the invention, the working surface C has a portion shaped as an annular recess having an axially symmetrical shape with respect to the plane of axial symmetry p, adapted to receive, axially contain and form the thickened ends 26, 36 of the annular blanks.

In the illustrated embodiment, the annular recess of the working surface C comprises an annular valley which has two tapered sides C1, C2, arranged on opposite sides of the plane of symmetry p and facing towards the plane of symmetry p. This arrangement favors the annulment of axial components of the resultant of the forces and reactions exchanged between the forming tool of the annular blanks. In the illustrated embodiment, the tapered sides C1, C2 each have a convex curved contour, when viewed in axial cross section, for forming raceways having a rounded cross section for a ball bearing. In other embodiments (not illustrated), the tapered sides C1, C2 may be conical to form the raceways of a roller bearing.

In other embodiments, the outer forming tool may have different shapes from that of a roller. For example, in an alternative embodiment (not shown), the outer forming tool may be made as a forming die having an inner cylindrical surface in which a working surface C having a contour for example identical to that shown in Figure 6 is formed, but in a concave surface instead of a convex surface such as that of a roller.

The two blanks 20, 30 are arranged side by side, with the two side surfaces 27, 37 arranged in mutual abutment in the plane of symmetry p.

The mandrel M and the roller R are rotated about their respective axes x1, x2. At the same time the distance between the first axis x1 and the second axis x2 is varied in a controlled manner, bringing the working surface C of the outer forming roller R in contact with the radially outer surfaces 22, 32 of the annular blanks and the working surface A of the forming mandrel M in contact with the radially inner surfaces 21, 31. The annular blanks 20, 30 are pushed axially against one another, thus are radially compressed and plastically deformed between the inner forming mandrel M and the outer forming roller R. Thus, at the end of the roll forming step, two substantially identical bearing rings are obtained, each having a radially outer surface 12 with a contour equal to the contour of a half of the working surface C of the outer roller, and a radially inner surface 11 having a contour equal to the contour of a half of the working surface A of the forming mandrel. The mode of operation of the roll forming apparatus that includes the inner forming mandrel and the outer roller may vary depending on the needs and should not appreciably differ with respect to the operating modes of known roll forming processes.
Thanks to the axially symmetric arrangement of the forming surfaces A and C, during the rolling step the resultant of the thrust exerted by the roller R is axially balanced, so as to result in a radial compression of two annular blanks. The two thrust forces, considered individually, that each blank 20, 30 receives from the respective part of the roller R acting on it, have opposing destabilizing axial components that are mutually balanced and cancelled. The two blanks, being identical, together form an axially symmetrical or specular unit with respect to the plane p. The two opposing side surfaces 27, 37 in abutment against one another, provide for each other a steady lateral abutment surface which is perpendicular to the central axis of the rings.

The method according to the invention allows to extend the advantages that are achieved typically by roll forming also to the manufacture of bearing rings having asymmetrical cross sections. It will be appreciated that the method allows to achieve a considerable saving of material compared to conventional methods used for asymmetrical bearing rings. As can be observed from a comparison of Figures 4, 5 and 9, 10, a blank S1 obtained traditionally by forging (Figure 4), which is subsequently subjected to a treatment of lathing (Figure 5) has a bottom part F1 definitely more voluminous than the bottom part F2 of a blank S2 (Figure 9) to be rolled. The bottom part F2 of the latter, at equal axial cross-sectional area of the finished ring, has a significantly shorter diameter, with a consequent reduction of the material wasted in comparison to conventional machining processes. Experimental tests carried out by the Applicant have shown a reduction of the waste material, variable depending on the ring size, of the order of 10-13%. Added to this are the well-known advantages deriving from roll forming, which include an additional compaction of the metal layers, which increases the raceway hardness.

It is understood that the invention is not limited to the embodiments described and illustrated here, which are to be considered as examples of the method. Those skilled in the art will readily understand that several changes may be made regarding shapes, dimensions, constructional and functional details and the configuration of the forming tool, without departing from the scope of the invention as defined in the appended claims.

## Claims

1. A cold rolling method for forming a bearing ring (10) with an outer surface (12) having a given contour and an inner surface (11) having a given contour, the method comprising the steps of:
(a) providing two substantially identical annular blanks (20, 30) each defining a central axis (x) and each having a radially inner surface (21, 31), a radially outer surface (22, 32), and a side surface (27, 37) which extends perpendicularly to the central axis (x), wherein the radially outer surface (22, 32) of each annular blank (20, 30) has an asymmetrical contour when viewed in axial section, with two opposite axial ends and a radial thickening (26, 36) at one of the two axial ends;
(b) providing a forming mandrel (M) rotatable about a first axis (x1) and having a working surface (A) with an outer contour defining a plane of symmetry (p) with respect to the first axis (x1);
(c) providing an outer forming tool (R) rotatable about a second axis (x2) parallel to the first axis (x1), the outer forming tool (R) having a working surface (C) with a contour which is axially symmetric with respect to the plane of symmetry (p);
(d) placing the two annular blanks (20, 30) between the forming mandrel (M) and the outer forming tool (R) with the two blanks axially positioned side to side with the respective side surfaces mutually abutting in the plane of symmetry (p);
(e) causing the forming mandrel (M) and the outer forming tool (R) to rotate about respective first and second axes (x1, x2), and simultaneously varying in controlled manner the distance between the first (x1) and the second (x2) axes, bringing the working surface (C) of the outer forming tool (R) in contact with the radially outer surfaces (22, 32) of the annular blanks and the working surface (A) of the forming mandrel (M) in contact with the radially inner surfaces (21, 31) of the annular blanks, so as to radially press and plastically deform the annular blanks (20, 30) between the forming mandrel (M) and the outer forming tool (R);
**characterized in that**
the side surface (27, 37) which extends perpendicularly to the central axis (x) is located at the axial end that provides the radial thickening (26, 36), **and that**
the working surface (C) of the outer forming tool (R) provides at least a portion shaped as an annular recess (B) having an axially symmetrical shape with respect to the plane of symmetry (p).

2. A method according to claim 1, wherein the radially outer surfaces (22, 32) of the annular blanks (20, 30) are so shaped that each outer surface provides a first, cylindrical axial end zone (23, 33) having a first outer diameter (d3), and a second axial end zone (24, 34) having a second outer diameter (d4) greater than the first outer diameter (d3), and a surface (25, 35) connecting the first axial end zone end to the second axial end zone.

3. A method according to claim 1 or 2, wherein the radially inner surfaces (21, 31) of the annular blanks (20, 30) are substantially cylindrical or tapered.

4. A method according to any one of the preceding claims, wherein the working surface (A) of the forming mandrel (M) has an annular relief (B) having a shape axially symmetrical relative to the plane (p).

5. A method according to claim 1, wherein said portion shaped as an annual recess comprises two tapered flanks (C1, C2) located on opposite sides of the plane of symmetry (p) and facing the plane (p).

6. A method according to claim 5, wherein the tapered flanks (C1, C2) each have a curved, convex contour, when viewed in an axial cross-section.

7. A method according to claim 5, wherein the tapered flanks (C1, C2) are conical.

8. A method according to any one of the preceding claims, wherein the outer forming tool is a roller (R).

9. A method according to any one of the preceding claims, wherein step (a) includes the step of forging the annular blanks (20, 30).

## Patentansprüche

1. Kaltwalzverfahren zum Formen eines Lagerrings (10) mit einer äußeren Fläche (12), die eine gegebene Kontur aufweist, und einer inneren Fläche (11), die eine gegebene Kontur aufweist, wobei das Verfahren die Schritte umfasst:
(a) Bereitstellen von zwei im Wesentlichen identischen ringförmigen Rohlingen (20, 30), die jeweils eine Mittenachse (x) definieren und jeweils eine radial innere Fläche (21, 31), eine radial äußere Fläche (22, 32) und eine senkrecht zur Mittenachse (x) verlaufende Seitenfläche (27, 37) aufweisen, wobei die radial äußere Fläche (22, 32) jedes ringförmigen Rohlings (20, 30) eine bei Betrachtung im Axialschnitt asymmetrische Kontur mit zwei entgegengesetzten axialen Enden und einer radialen Verdickung (26, 36) an einem der beiden axialen Enden aufweist;
(b) Bereitstellen eines um eine erste Achse (x1) drehbaren Formdorns (M), der eine Bearbeitungsfläche (A) mit einer Außenkontur aufweist, die eine Symmetrieebene (p) in Bezug auf die erste Achse (x1) definiert;
(c) Bereitstellen eines äußeren Formwerkzeugs (R), das um eine zweite Achse (x2) parallel zur ersten Achse (x1) drehbar ist, wobei das äußere Formwerkzeug (R) eine Bearbeitungsfläche (C) mit einer Kontur aufweist, die axial symmetrisch zur Symmetrieebene (p) ist;
(d) Einlegen der beiden ringförmigen Rohlinge (20, 30) zwischen den Formdorn (M) und das äußere Formwerkzeug (R), wobei die beiden Rohlinge axial nebeneinander positioniert werden und in der Symmetrieebene (p) mit den entsprechenden Seitenflächen aneinander anstoßen;
(e) Bewirken, dass der Formdorn (M) und das äußere Formwerkzeug (R) sich um die entsprechende erste bzw. zweite Achse (x1, x2) drehen, bei gleichzeitigem Verstellen des Abstands zwischen der ersten (x1) und der zweiten (x2) Achse in kontrollierter Weise, Inkontaktbringen der Bearbeitungsfläche (C) des äußeren Formwerkzeugs (R) mit den radial äußeren Flächen (22, 32) der ringförmigen Rohlinge sowie der Bearbeitungsfläche (A) des Formdorns (M) mit den radial inneren Flächen (21, 31) der ringförmigen Rohlinge, um die ringförmigen Rohlinge (20, 30) zwischen dem Formdorn (M) und dem äußeren Formwerkzeug (R) radial zu pressen und plastisch umzuformen;
**dadurch gekennzeichnet, dass**
die senkrecht zur Mittelachse (x) verlaufende Seitenfläche (27, 37) am axialen Ende, das die radiale Verdickung (26, 36) bereitstellt, angeordnet wird,
**und dadurch, dass**
die Bearbeitungsfläche (C) des äußeren Formwerkzeugs (R) mindestens einen Abschnitt bereitstellt, der als ringförmige Aussparung (B) ausgeformt ist, die in Bezug zur Symmetrieebene (p) eine axial symmetrische Form aufweist.

2. Verfahren nach Anspruch 1, wobei die radial äußeren Flächen (22, 32) der ringförmigen Rohlinge (20, 30) so geformt sind, dass jede äußere Fläche einen ersten, zylindrischen axialen Endbereich (23, 33) mit einem ersten Außendurchmesser (d3) und einen zweiten axialen Endbereich (24, 34) mit einem zweiten Außendurchmesser (d4), der größer als der erste Außendurchmesser (d3) ist, sowie eine Fläche (25, 35), die den ersten axialen Endbereich mit dem zweiten axialen Endbereich verbindet, bereitstellt.

3. Verfahren nach Anspruch 1 oder 2, wobei die radial inneren Flächen (21, 31) der ringförmigen Rohlinge (20, 30) im Wesentlichen zylindrisch oder abgeschrägt sind.

4. Verfahren nach einem der vorhergehenden Ansprüche, wobei die Bearbeitungsfläche (A) des Formdorns (M) ein ringförmiges Relief-Element (B) mit einer Form aufweist, die axial symmetrisch zur Ebene (p) ist.

5. Verfahren nach Anspruch 1, wobei der als ringförmige Aussparung geformte Abschnitt zwei abgeschrägte Flanken (C1, C2) umfasst, die an entgegengesetzten Seiten der Symmetrieebene (p) angeordnet sind und der Ebene (p) zugewandt sind.

6. Verfahren nach Anspruch 5, wobei die abgeschrägten Flanken (C1, C2) jeweils eine gekrümmte konvexe Kontur aufweisen, wenn im Axialquerschnitt betrachtet.

7. Verfahren nach Anspruch 5, wobei die abgeschrägten Flanken (C1, C2) konisch sind.

8. Verfahren nach einem der vorhergehenden Ansprüche, wobei das äußere Formwerkzeug eine Walze (R) ist.

9. Verfahren nach einem der vorhergehenden Ansprüche, wobei Schritt (a) den Schritt umfasst: Schmieden der ringförmigen Rohlinge (20, 30).

## Revendications

1. Procédé de laminage à froid pour façonner une bague (10) de roulement ayant une surface extérieure (12) comportant un contour donné et une surface intérieure (11) comportant un contour donné, la méthode comprenant les étapes consistant à :
(a) approvisionner deux pièces brutes annulaires (20, 30) sensiblement identiques, chacune définissant un axe central (x) et chacune comportant une surface radialement intérieure (21, 31), une surface radialement extérieure (22, 32), et une surface latérale (27, 37) qui s'étend perpendiculairement à l'axe central (x), dans lequel la surface radialement extérieure (22, 32) de chaque pièce brute annulaire (20, 30) présente un contour asymétrique quand on la regarde en coupe axiale, avec deux extrémités axiales opposées et un épaississement radial (26, 36) à l'une des deux extrémités axiales ;
(b) faire appel à un mandrin (M) de formage rotatif autour d'un premier axe (x1) et comportant une surface active (A) ayant un contour extérieur définissant un plan de symétrie (p) par rapport au premier axe (x1) ;
(c) faire appel à un outil à former extérieur (R) rotatif autour d'un second axe (x2) parallèle au premier axe (x1), l'outil à former extérieur (R) comportant une surface active (C) ayant un contour qui est axialement symétrique par rapport au plan de symétrie (p) ;
(d) placer les deux pièces brutes annulaires (20, 30) entre le mandrin (M) de formage et l'outil à former extérieur (R), les deux pièces brutes étant placées axialement côte à côte avec leurs surfaces latérales respectives en butée l'une contre l'autre dans le plan de symétrie (p) ;
(e) faire tourner le mandrin (M) de formage et l'outil à former extérieur (R) autour respectivement des premier et second axes (x1, x2), et simultanément faire varier de manière contrôlée la distance entre le premier (x1) et le second (x2) axe, en amenant la surface active (C) de l'outil à former extérieur (R) au contact des surfaces radialement extérieures (22, 32) des pièces brutes annulaires et la surface active (A) du mandrin (M) de formage au contact des surfaces radialement intérieures (21, 31) des pièces brutes annulaires, de façon à presser radialement et déformer plastiquement les pièces brutes annulaires (20, 30) entre le mandrin (M) de formage et l'outil à former extérieur (R),
**caractérisé en ce que** :
la surface latérale (27, 37) qui s'étend perpendiculairement à l'axe central (x) est située à l'extrémité axiale qui assure l'épaississement radial (26, 36), et **en ce que**
la surface active (C) de l'outil à former extérieur (R) produit au moins une partie façonnée en évidement annulaire (B) ayant une forme axialement symétrique par rapport au plan de symétrie (p).

2. Procédé selon la revendication 1, dans lequel les surfaces radialement extérieures (22, 32) des pièces brutes annulaires (20, 30) sont façonnées de telle sorte que chaque surface extérieure offre une première zone terminale (23, 33) axiale cylindrique ayant un premier diamètre extérieur (d3), et une seconde zone terminale (24, 34) axiale ayant un second diamètre extérieur (d4) supérieur au premier diamètre extérieur (d3), et une surface (25, 35) raccordant la première zone terminale axiale à la seconde zone terminale axiale.

3. Procédé selon la revendication 1 ou 2, dans lequel les surfaces radialement intérieures (21, 31) des pièces brutes annulaires (20, 30) sont sensiblement cylindriques ou coniques.

4. Procédé selon l'une quelconque des revendications précédentes, dans lequel la surface active (A) du mandrin (M) de formage comporte un relief annulaire (B) ayant une forme axialement symétrique par rapport au plan (p).

5. Procédé selon la revendication 1, dans lequel ladite partie façonnée en évidement annulaire comprend deux flancs en biseau (C1, C2) situés de part et d'autre du plan de symétrie (p) et tournés vers le plan (p).

6. Procédé selon la revendication 5, dans lequel les flancs en biseau (C1, C2) ont chacun un contour courbe convexe quand on les regarde en coupe transversale axiale.

7. Procédé selon la revendication 5, dans lequel les flancs en biseau (C1, C2) sont coniques.

8. Procédé selon l'une quelconque des revendications précédentes, dans lequel l'outil à former extérieur est un rouleau (R).

9. Procédé selon l'une quelconque des revendications précédentes, dans lequel l'étape (a) comprend l'étape consistant à forger les pièces brutes annulaires (20, 30).
